Europäisches Patentamt

European Patent Office

Office européen des brevets

(19)

(11) Veröffentlichungsnummer: **0 309 836**
**A2**

(12)

# EUROPÄISCHE PATENTANMELDUNG

(21) Anmeldenummer: 88115238.3

(51) Int. Cl.⁴: **F16L 5/02**

(22) Anmeldetag: 16.09.88

Die Bezeichnung der Erfindung wurde geändert (Richtlinien für die Prüfung im EPA, A-III, 7.3).

(30) Priorität: 01.10.87 DE 3733237
05.02.88 DE 3803492

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: **Sichert GmbH & Co.**
**Grossbeerenstrasse 134A**
**D-1000 Berlin 48(DE)**

(72) Erfinder: **Hesse, Hans Hermann**
**Kitzingstrasse 1-5**
**D-1000 Berlin 48(DE)**
Erfinder: **Frewer, Raimund**
**Alter Dortmunder Weg 40**
**D-5840 Schwerte 1(DE)**

(74) Vertreter: **Wey, Hans-Heinrich, Dipl.-Ing.**
**Patentanwälte Wey & Partner**
**Widenmayerstrasse 49**
**D-8000 München 22(DE)**

(54) **Wasser- und gasdichte Mantelrohrdurchführung durch das Mauerwerk von Hauswänden und dergleichen.**

(57) Wasser- und gasdichte Mantelrohrdurchführung durch das Mauerwerk von Haus- u.dgl.-wänden für das Ein- bzw. Hindurchführen von Kabeln bzw. Schläuchen oder Rohren, bei welcher auf das äußere Ende eines in einen Mauerdurchbruch (12) eingesetzten Mantelrohrstücks (13) eine Dichtungsanordnung (16) aufgesetzt ist, welche aus einer Bitumenplatte (17), einer Ringscheibe (19), einem Dichtkörper (22), einem Dichtelement (26), einer Stützscheibe (32) und einer Andruckmutter (15) besteht, und das Mantelrohrstück (13) im Mauerdurchbruch (12) an dem umgebenden Mauerwerk (11) verankert ist.

## FIG. 6

EP 0 309 836 A2

## Wasser- und gasdichte Mantelrohrdurchführung durch das Mauerwerk von Haus- u.dgl. -wänden

Die Erfindung betrifft eine wasser- und gasdichte Mantelrohrdurchführung durch das Mauerwerk von Haus- u.dgl.-wänden für das Hindurchführen von Kabeln, Schläuchen oder Rohren, bei welcher in einem in diesem Mauerwerk befindlichen Durchbruch ein Mantelrohr und zwischen dem Mauerwerk und dem Mantelrohr eine Dichtung angeordnet ist.

Es ist bisher üblich, zum Hindurchführen von Kabeln bzw. auch Schläuchen oder Rohren durch ein Mauerwerk in dieses eine Öffnung bzw. einen Durchbruch zu bohren bzw. zu brechen und in diese ein Mantelrohr einzusetzen, woraufhin der Zwischenraum zwischen dem Mauerdurchbruch und dem Mantelrohr mit einer plastischen Masse, wie Betonmörtel oder einer anderen Vergußmasse, ausgefüllt wird. Durch das Mantelrohr hindurch werden sodann Kabel und/oder Rohre in das Innere des Gebäudes eingeführt, wobei der Zwischenraum zwischen den Kabeln und bzw. oder gegebenenfalls den Rohren und dem Mantelrohr ebenfalls mit einer Vergußmasse ausgefüllt wird, um einen Schutz gegen eventuell von außen eindringendes Wasser oder auch Gas zu gewährleisten.

Kabel- und Rohrverlegungen unter Anwendung der vorgenannten Technik erfordern einen nicht unbeträchtlichen handwerklichen Aufwand und müssen als rückständig betrachtet werden. Sie lassen keine rationelle Arbeitsweise zu, die aber notwendig ist, um insbesondere nachträglich in bestehende Gebäude in einer Vielzahl von Fällen Kabel einzuführen, beispielsweise Fernmeldekabel, Antennenkabel für Radio- und Fernsehgeräte usw. Die hierfür entstehenden Kosten sind somit außerordentlich hoch.

Aus der DE-PS 36 23 550 ist eine Vorrichtung zum Abdichten von Rohren, Kabeln od.dgl., welche durch ein in einer Öffnung im Mauerwerk angeordnetes Mantelrohr hindurchgeführt werden, bekanntgeworden. Bei dieser Vorrichtung ist ein auf das Mantelrohr aufschrumpfbares Wandeinführungsrohr von einer gegen das Mauerwerk im Bereich der Maueröffnung geöffneten Glocke umgeben, die mit einer ausdrückbaren Dichtungsmasse gefüllt ist und an ihrem peripheren Rand eine Dichtungsscheibe trägt. Diese Dichtungsscheibe bildet mit dem Wandeinführungsrohr eine Austrittsöffnung für die Dichtungsmasse, die auf unterschiedlichste Weise aus dem Innenraum der Glocke ausgepreßt werden kann, um in den Zwischenraum zwischen der Maueröffnung und dem Wandeinführungsrohr zu gelangen. Um eine gleichmäßige Abdichtung zu erreichen, ist am inneren Ende des Wandeinführungsrohrs ein Kragen angebracht, der verhindern soll, daß die Dichtungsmasse unkontrolliert tiefer in die Maueröffnung eindringen kann als gewünscht.

Auch eine solche Vorrichtung weist noch Mängel und Nachteile auf, die insbesondere in der etwas umständlichen Handhabung begründet sind, die eine Vielzahl handwerklicher Maßnahmen erfordern. Nachteilig ist auch, daß nicht mit der notwendigen Sicherheit gewährleistet ist, daß die Dichtung zwischen dem Wandeinführungsrohr und der Maueröffnung absolut wasser- und gasdicht ist, um den Anforderungen zu genügen.

Der Erfindung liegt die Aufgabe zugrunde, die Verlegung von Kabeln bzw. gegebenenfalls auch von Schläuchen oder Rohren im Bereich der Einführung derselben in ein Gebäude durch das Mauerwerk hindurch zu erleichtern, zu vereinfachen und rationell zu gestalten, wobei eine absolut sichere Abdichtung im Bereich der Einführungsstelle gewährleistet ist, so daß weder Wasser noch Gase von außen her in die Maueröffnung und von dort in das Innere des Gebäudes gelangen können.

Zur Lösung dieser Aufgabe wird gemäß der Erfindung vorgeschlagen, eine Anordnung vorzusehen, welche diejenigen Merkmale aufweist, die im Anspruch 1 angegeben sind.

Weitere Merkmale der erfindungsgemäß ausgebildeten Anordnung gehen aus den Unteransprüchen und der nachstehenden Beschreibung bevorzugter Ausführungsbeispiele hervor, welche in den Figuren 1 bis 8 der Zeichnung dargestellt sind. Es zeigen:

Fig. 1 einen Längsschnitt durch eine erfindungsgemäß ausgebildete Mantelrohrdurchführung und Dichtungsanordnung in einem Stadium während der Montage;

Fig. 2 eine fertiggestellte Mantelrohrdurchführung nach Abschluß der Montagearbeiten;

Fig. 3 einen auf das Mantelrohr aufzuschiebenden Dichtkörper in Seitenansicht bzw. im Schnitt;

Fig. 4 und 5 je einen Längsschnitt durch ein Mauerwerk mit Durchbruch und ein in diesen eingesetztes, mit einer Dichtungsanordnung versehenes Mantelrohr;

Fig. 6 und 7 je einen Längsschnitt durch das Mauerwerk in seiner Gesamtstärke mit einer Anordnung nach Fig. 4.

Fig. 8 einen Längsschnitt durch das Mauerwerk mit einer Mantelrohrdurchführung in einer weiteren Ausführungsform.

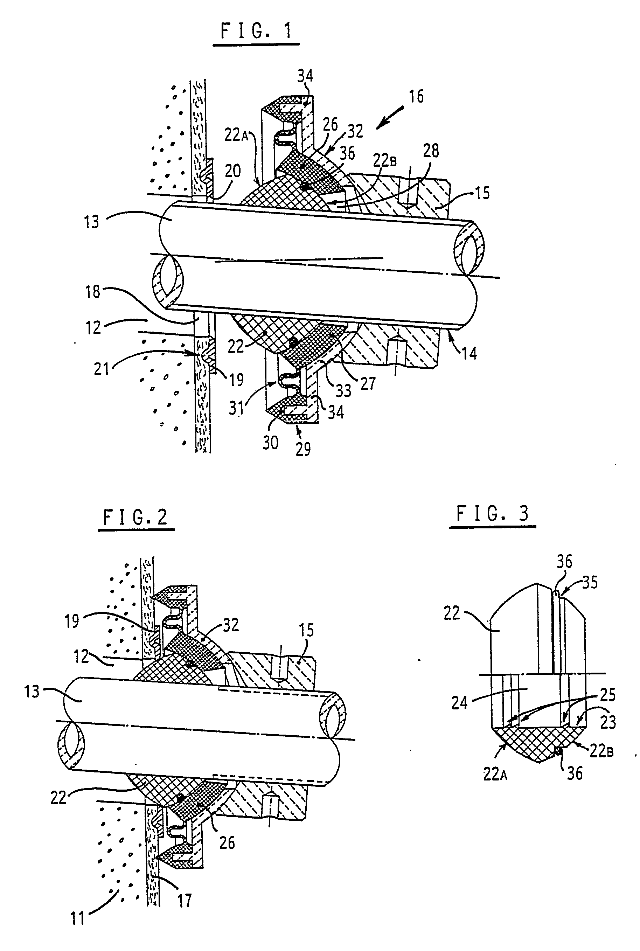

Die in den Figuren 1 und 2 dargestellte, erfindungsgemäß ausgebildete Mantelrohrdurchführung bzw. Dichtungsanordnung weist den nachstehend beschriebenen Aufbau auf.

2

In dem Mauerwerk 11 befindet sich der Mauerdurchbruch 12, der in üblicher Weise mittels geeigneter Werkzeuge gebohrt worden ist und durch den das Mantelrohr 13 hindurchgeführt werden soll. Das Mantelrohr 13 kann aus Kunststoff oder Stahl bestehen und trägt vorzugsweise ein Gewinde 14 für die Andruckmutter 15 der Dichtungsanordnung 16. Auf die Außenseite des Mauerwerks 11 ist eine faserverstärkte Bitumenplatte 17 ausreichender Dimensionierung fest und dicht aufgeklebt. Die Bitumenplatte 17 weist einen zentralen kreisrunden Ausschnitt 18 in der Größe des Mauerdurchbruchs 12 auf. Auf die Bitumenplatte 17 ist koaxial zu dem Loch 18 eine Ringscheibe 19 aufgesetzt, deren Lochlaibung 20 kegelförmig ausgebildet ist und die wenigstens eine Ringrippe 21 aufweist, die in die Bitumenplatte 17 eingedrückt ist. Auf dem Mantelrohr 13 sitzt der an der Ringscheibe 19 anliegende bikonvexe Dichtkörper 22 aus dauerelastischem Werkstoff, der eine innere bzw. äußere sphärische Oberfläche 22a bzw. 22b aufweist. Dieser Dichtkörper 22 gewährleistet eine einwandfreie Abdichtung der Mauerdurchführung, auch wenn das Mantelrohr 13 nicht koaxial in dem Mauerdurchbruch 12 liegt. Bei der Montage häufig vorkommende Winkelabweichungen sind unschädlich, da die innere sphärische Oberfläche 22a des Dichtkörpers 22 stets vollflächig im Berührungsbereich an der Lochlaibung 20 der Ringscheibe 19 anliegt.

Um eine gute Abdichtung zwischen dem Mantelrohr 13 und dem dieses umgebenden Dichtkörper 22 zu gewährleisten, sind an der Innenwand 23 der zentralen Öffnung 24 des Dichtkörpers 22 nach innen vorspringende Dichtlippen 25 angeordnet, wie dies insbesondere aus Fig. 3 hervorgeht.

An der äußeren Fläche 22b des Dichtkörpers 22 liegt ein Dichtungselement 26 mit zentralem kalottenförmigem Teil 27 an, der eine entsprechend große zentrale Öffnung 28 aufweist, um Winkelabweichungen ermöglichen zu können. Der sich von dem zentralen kalottenförmigen Teil 27 nach außen erstreckende ringförmige Teil 29 des Dichtungselements 26 besitzt ein peripheres ringförmiges Dichtungsprofil 30 mit wenigstens einer Dichtungsrippe, welches gegen die Bitumenplatte 17 angedrückt wird und welches mittels eines Faltenbalges 31 mit dem zentralen Teil 27 verbunden ist. Auf der Außenseite des Dichtungselements 26 liegt die an deren Form angepaßte Stützscheibe 32 an, die einen zentralen kalottenförmigen Teil 33 und einen peripheren ringförmigen Teil 34 besitzt; letzterer dient insbesondere dazu, das Dichtungsprofil 30 des Dichtungselements 26 fest gegen die Bitumenplatte 17 anzudrücken. Auf die äußere Fläche der Stützscheibe 32 wirkt die innere sphärische Stirnfläche der auf das Gewinde 14 des Mantelrohrs 13 aufgeschraubten Mutter 15 ein, mittels welcher die gesamte Dichtungsanordnung 16 fest zusammen- und gegen das Mauerwerk 11 angedrückt wird.

Auch wenn die sphärische Dichtungsfläche zwischen dem Dichtkörper 22 und dem Dichtungselement 26 verhältnismäßig groß ist und eine ausreichende Dichtigkeit gewährleistet, kann es vorteilhaft sein, in der Außenseite 22b des Dichtkörpers 22 noch eine Ringnut 35 vorzusehen, in welche ein Dichtungsring vorzugsweise in Form eines 0-Rings 36 eingelegt ist.

Die Durchmesser der zentralen Öffnungen in der Ringscheibe 19 in dem Dichtungselement 26 und in der Stützscheibe 32 sind wenigstens um etwa 10 bis 30 % größer als der Durchmesser des Mantelrohrs 13, um bei Winkelabweichungen der Rohrachse gegenüber der Achse des Mauerdurchbruchs 12 stets eine einwandfreie wasser- und gasdichte Mantelrohrdurchführung zu gewährleisten.

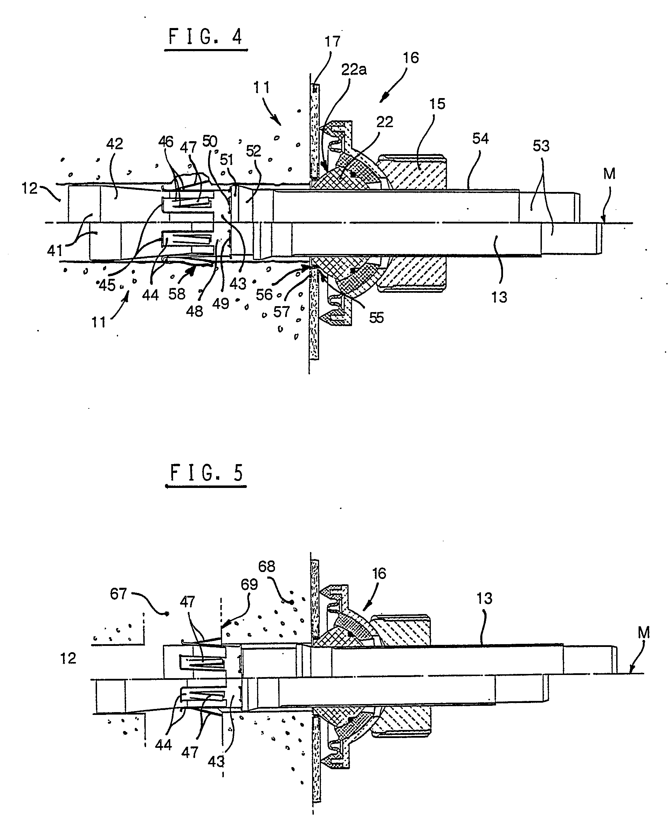

Aus den Figuren 4 und 5 geht die Festlegung bzw. Verankerung des in einen Mauerdurchbruch 12 eingesetztem Mantelrohrstücks 13 mit seiner auf der Außenseite des Mauerwerks 11 angeordneten Dichtungsvorrichtung 16 hervor, wobei das Mauerwerk in Fig. 4 aus monolitischem Beton und in Fig. 5 aus Hohlraum-Mauersteinen besteht.

In der oberen Hälfte der Fig. 4, und zwar oberhalb der Mittellinie M, ist die Anordnung zur Verankerung des Mantelrohrstücks 13 an dem dieses umgebende Mauerwerk 11 in einer Lage dargestellt, nachdem das Mantelrohrstück 13 mit seinem inneren Ende in die Maueröffnung 12 eingesetzt worden ist und bevor die Anordnung in axialer Richtung ausgespannt ist, um eine ordnungsgemäße wasser- und gasdichte Abdichtung herbeizuführen.

Wenn in der nachstehenden Beschreibung des Ausführungsbeispiels der Kupplungsanordnung von "innen" bzw. "außen" die Rede ist, so bezieht sich der Ausdruck "innen" auf die Innenseite des Mauerwerks 11 und der Ausdruck "außen" auf die Außenseite des Mauerwerks 11 des Bauwerks.

An dem inneren Ende 41 des Mantelrohrstücks 13 befindet sich eine sich axial von innen nach außen hin verjüngende Kegelfläche 42, welche von einer Federstahlmanschette 43, vorzugsweise aus nichtrostendem Stahl, umgeben ist, die an der Kegelfläche 42 anliegende, axial nach innen ragende, über den Umfang der Federstahlmanschette 43 gleichmäßig verteilt angeordnete Lappen 44 aufweist, deren freie Enden zur Bildung einer Kralle 45 nach außen umgebogen sind. In jedem der Lappen 44 befindet sich ein U-förmiger Schnitt 46 zur Bildung von radial schräg nach außen und axial nach außen ragenden Federzungen 47. An seinem axial nach außen gerichteten Rand 48 sind radial nach außen umgebogene Stützlappen 49 od.dgl. angeordnet, welche an einer radialen Stützschulter 50 eines Bundes 51 anliegen, dessen außen liegende Flanke 52 kegelförmig ausgebildet ist.

Das äußere, aus der Maueröffnung 12 nach außen ragende Ende 53 des Mantelrohrs 13 ist mit einem Außengewinde 54 versehen, auf welches beispielsweise eine Ringmutter 15, vorzugsweise eine, eine vorbestimmte und begrenzte Andruckkraft sichernde Drehmomentmutter, aufgeschraubt ist, welche die Dichtungsvorrichtung 16 gegen das Mauerwerk 11 andrückt.

Im übrigen entspricht die Dichtungsvorrichtung im wesentlichen derjenigen nach den Figuren 1 bis 3, die zuvor ausführlich beschrieben worden ist.

Um eine einwandfreie und definierte Anlage des Dichtkörpers 22 mit seiner sphärischen Innenfläche 22a an dem Rand 55 des Loches 56 in der faserverstärkten Bitumenplatte 17 zu gewährleisten, ist der Rand des Loches 56 mit einem U-förmig profilierten Einfassungsring 57 aus Stahlblech oder einem anderen geeigneten Werkstoff verkleidet, an welchem der Dichtkörper 22 anliegt.

Beim Anziehen der Mutter 15 wird das Mantelrohrstück 13 nach außen bewegt. Hierbei gelangen die Zungen 47 der Lappen 44 der Federstahlmanschette 43 zur Anlage an einer Ausweitung 58 in der Maueröffnung 12 und stützen dabei diese gegen jede weitere axiale Auswärtsbewegung ab. Bei weiterer axialer Auswärtsbewegung des Mantelrohrstücks 13 gleiten die Lappen 44 der Manschette 43 an der Kegelfläche 42 entlang, wobei ihre hinteren Krallen 45 radial nach außen gegen die Innenwand der Maueröffnung 12 angedrückt bzw. in diese hineingedrückt werden, wodurch eine feste und sichere Verankerung des Mantelrohrstücks 13 an seinem inneren Ende 41 erfolgt (Fig. 4, untere Hälfte). Bei weiterem Anziehen der Mutter 15 wird die Dichtungsvorrichtung 16 gegen die Außenfläche des Mauerwerks 11 mit der gewünschten Kraft angedrückt, wodurch eine sichere Abdichtung gewährleistet ist. Auf das äußere Ende 53 des Mantelrohrstücks 13 kann nun ein außerhalb des Mauerwerks 11 liegendes Mantelrohr oder ein Kabelverteilungsformstück abdichtend aufgeschraubt werden.

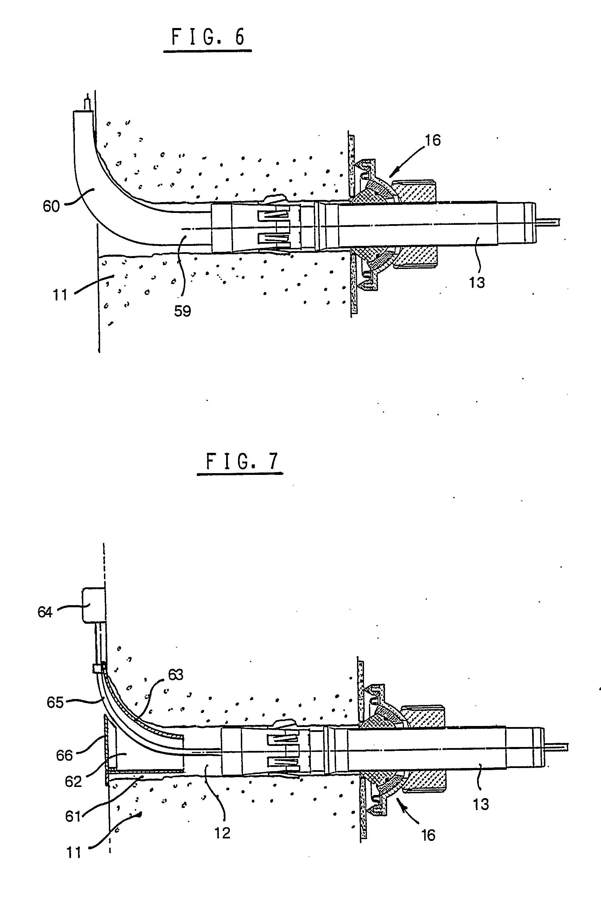

Es ist aber auch möglich, das innere Ende 41 des Mantelrohrstücks 13 mit einem innen liegenden Mantelrohrstück 59 zu verbinden, welches in das Innere des Gebäudes hineinragt, wie Fig. 6 dies erkennen läßt. Vorteilhafterweise ist dieses Mantelrohrstück 59 mit einem Krümmer 60 versehen, der einen solchen Krümmungsradius aufweist, daß die Leiter in dem oder in den Kabel(n) nicht beschädigt oder in unzulässiger Weise geknickt werden.

Es ist aber auch, wie aus Fig. 7 ersichtlich, möglich, in die an ihrem inneren Ende 61 in einer radialen Ebene aufgeweitete Maueröffnung 12 einen diese verkleidenden Einsatz 62, beispielsweise aus Kunststoff, einzusetzen, der mit seiner gekrümmten Wandfläche 63 eine Anlagefläche für das oder die in einen an der Innenwand des Mauerwerks 11 angebrachten Anschlußkasten 64 einzuführenden Kabel 65 bildet, wodurch gleichfalls die zulässige Krümmung des oder der Kabel nicht überschritten wird. Die innere Öffnung des Einsatzes 62 kann mit einem Deckel 66 weitgehend verschlossen werden.

Die erfindungsgemäß ausgebildete Kupplungsanordnung hat sich insbesondere auch bei Maueröffnungen 12 in einem Mauerwerk 11, das aus Hohlräume 67 enthaltenden Mauersteinen 68 besteht, bewährt. Die Maueröffnung 12 durchdringt dabei, wie aus Fig. 5 hervorgeht, den Hohlraum 67, wodurch dann die eine Anlagefläche 69 für .die Zungen 47 der Lappen 44 der Federstahlmanschette 43 gebildet wird. In diesem Falle wird die Federstahlmanschette 43 lediglich mittels der Zungen 47 an einer weiteren Axialbewegung nach außen gehindert.

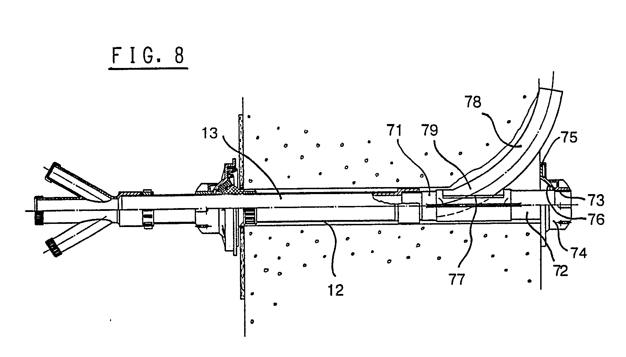

Eine weitere Ausführungsform geht aus Fig. 8 hervor. Bei dieser erfolgt die Verankerung des im Mauerdurchbruch 12 liegenden Mantelrohrs 13 mittels eines Rohrstücks 71, welches mit dem Mantelrohr 13 verbunden, beispielsweise verschraubt ist. Das innere Ende 72 ist mit einem Gewinde 73 versehen, auf welches die Verankerungsmutter 74 unter Zwischenlage einer Ringscheibe 75 aufgeschraubt ist. Die Ringscheibe weist vorzugsweise in ihrer Mitte einen kugelkalottenförmigen Teil 76 auf, an dem die Mutter 74 mit ihrem äußeren Ende anliegt, um einen Winkelausgleich zu ermöglichen. In dem Rohr 71 befindet sich ein Ausschnitt 77, aus dem die durch das Mantelrohr 13 hindurchgeführten Kabel oder Rohre in sanfter Krümmung herausführbar sind, um schädliche scharfe Abknikkungen zu vermeiden.

Es ist weiterhin möglich, in den Ausschnitt 47 einen Rohrkrümmer 78 mit seinem entsprechend geformten Ende 79 einzusetzen, durch den hindurch die Kabel oder dgl. herausleitbar sind.

## Ansprüche

1. Wasser- und gasdichte Mantelrohrdurchführung durch das Mauerwerk von Haus- u.dgl. -wänden für das Hindurchführen von Kabeln, Schläuchen oder Rohren, bei welcher in einem in diesem Mauerwerk befindlichen Durchbruch ein Mantelrohr und zwischen dem Mauerwerk und dem Mantelrohr eine Dichtung angeordnet ist, gekennzeichnet durch die Kombination folgender Merkmale:

a) eine den Mauerdurchbruch (12) umgebende, auf das Mauerwerk (11) aufgeklebte, faserverstärkte Bitumenplatte (17) mit einer zum Mauerdurchbruch (12) koaxialen Öffnung (18);

b) eine zum Mauerdurchbruch (12) koaxiale Ringscheibe (19), deren Lochlaibung (20) kegelförmig ausgebildet ist;

c) einen an der Ringscheibe (19) anliegenden und auf dem Mantelrohr (13) sitzenden bikonvexen Dichtkörper (22) aus dauerelastischem Werkstoff mit sphärischen Oberflächen (22a,22b);

d) ein an der Außenseite des Dichtkörpers (22) anliegendes Dichtungselement (26) mit zentralem kalottenförmigem Teil (27) und einem äußeren ringförmigen Dichtungsprofil (29), welches mit dem zentralen Teil mittels eines Faltenbalges (31) verbunden ist;

e) eine an der Außenseite des Dichtungselements (26) anliegende und an deren Form angepaßte Stützscheibe (32);

f) eine an der Stützscheibe (32) anliegende, auf ein Gewinde (14) des Rohrs (13) aufgeschraubte und die gesamte Dichtungsanordnung (16) gegen das Mauerwerk (11) andrückende Mutter (15).

2. Anordnung nach Anspruch 1, dadurch gekennzeichnet, daß die Ringscheibe (19) mit wenigstens einer gegen die faserverstärkte Bitumenplatte (17) gerichteten Ringrippe (21) versehen ist.

3. Anordnung nach Anspruch 1 oder 2, dadurch gekennzeichnet, daß der Dichtkörper (22) in seiner äußeren, sphärisch gewölbten Oberfläche (22b) eine Ringnut (35) aufweist, in welcher ein Dichtungsring (36) liegt.

4. Anordnung nach Anspruch 1, 2 oder 3, dadurch gekennzeichnet, daß an der Innenwand der zentralen Durchtrittsöffnung (24) des auf das Mantelrohr (13) aufgeschobenen Dichtkörpers (22) nach innen vorspringende Dichtlippen (25) angeordnet sind.

5. Anordnung nach einem oder mehreren der Ansprüche 1 bis 4, dadurch gekennzeichnet, daß die Durchmesser der zentralen Öffnungen in der Ringscheibe (19), in dem Dichtungselement (26) und in der Stützscheibe (32) um wenigstens etwa 10 bis 30 % größer sind als der Durchmesser des Mantelrohres (13).

6. Anordnung, insbesondere nach einem oder mehreren der Ansprüche 1 bis 5, dadurch gekennzeichnet, daß das in die Maueröffnung (12) eingesetzte und in diese hineinragende Ende (41) des Mantelrohrstücks (13) eine sich axial von innen nach außen hin verjüngende Kegelfläche (42) aufweist, welche von einer Federstahlmanschette (43) umgeben ist, die an der Kegelfläche (42) anliegende, axial nach innen ragende, über den Umfang der Manschette (43) gleichmäßig verteilt angeordnete Lappen (44) aufweist, deren freie Enden zur Bildung einer Kralle (45) radial nach außen umgebogen sind und in welchen sich ein U-förmiger Schnitt (46) zur Bildung von radial schräg nach außen und axial nach außen ragenden Federzungen (47) befindet, und die an ihrem axial nach außen gerichteten Rand (48) radial nach außen umgebogene Stützlappen (49) od.dgl. aufweist, welche an einer radialen Stützschulter (50) eines Bundes (51) anliegen.

7. Anordnung nach Anspruch 6, dadurch gekennzeichnet, daß die der Stützschulter (50) am Mantelrohrbund (51) gegenüberliegende Flanke (52) kegelförmig ausgebildet ist.

8. Anordnung nach Anspruch 6 oder 7, dadurch gekennzeichnet, daß sich auf dem axial nach außen ragenden Ende (53) des Mantelrohrstücks (13) ein Gewinde (54) befindet, auf das eine die Dichtungsvorrichtung (16) gegen das Mauerwerk (11) andrükkende Mutter (15) aufgeschraubt ist.

9. Anordnung nach Anspruch 8, dadurch gekennzeichnet, daß die Mutter (15) eine eine vorbestimmte, begrenzte Andruckkraft sichernde Drehmomentmutter ist.

10. Anordnung nach Anspruch 8 oder 9, dadurch gekennzeichnet, daß die mit der Außenwand des Mauerwerks (11) wasser- und gasdicht verklebte, faserverstärkte Bitumenplatte (17) einen den Rand des zentralen Loches (56) verkleidenden, U-förmig profilierten Einfassungsring (57) aufweist.

11. Anordnung nach einem oder mehreren der Ansprüche 6 bis 10, dadurch gekennzeichnet, daß mit dem äußeren Ende (53) des Mantelrohrstücks (13) ein Mantelrohr oder ein Kabelverteilungsformstück verbunden ist.

12. Anordnung nach einem oder mehreren der Ansprüche 6 bis 11, dadurch gekennzeichnet, daß mit dem inneren Ende (41) des Mantelrohrstücks (13) ein Mantelrohrstück (59) verbunden ist, welches vorzugsweise einen Krümmer (60) aufweist.

13. Anordnung nach einem oder mehreren der Ansprüche 6 bis 11, dadurch gekennzeichnet, daß in das innere, in einer radialen Ebene aufgeweitete Ende (61) der Maueröffnung (12) ein diese verkleidender Einsatz (62) eingesetzt ist, welcher eine gekrümmte Kabelanlagefläche (63) aufweist.

14. Anordnung nach einem der Ansprüche 6 bis 13, dadurch gekennzeichnet, daß die innere Öffnung des Einsatzes (62) mit einem diese weitgehend verschließenden Deckel (66) versehen ist.

15. Anordnung insbesondere nach einem oder mehreren der Ansprüche 1 bis 5, dadurch gekennzeichnet, daß das im Mauerdurchbruch (12) liegende Mantelrohr (13) mit einem inneren Rohrstück (71) verbunden ist, welches sich mittels einer Kugelkalottenscheibe (75) und einer auf das sich am inneren Ende (72) befindende Gewinde (73) aufgeschraubten Mutter (74) an der Innenwand des Mauerwerks (11) abstützt und welches in seiner Wandung einen Ausschnitt (77) für das Herausführen der Kabel oder dgl. aufweist.

16. Anordnung nach Anspruch 15, dadurch gekennzeichnet, daß in den Auschnitt (77) des Rohrstücks (71) ein Rohrkrümmer (78) mit seinem dem Auschnitt (77) angepaßten Ende (79) eingesetzt ist.

FIG. 1

FIG. 2

FIG. 3

FIG. 4

FIG. 5

## F I G. 6

## F I G. 7

F I G. 8